# FASCICULE DE BREVET EUROPEEN

(11) **EP 4 392 386 B1**
(45) Date de publication et mention de la délivrance du brevet: **18.11.2026**
(21) Numéro de dépôt: 22768792.8
(22) Date de dépôt: 23.08.2022
(51) Int. Cl.: C04B 28/02, C04B 28/10, E04B 1/14, E04B 1/80, E04B 1/38, E04B 1/74, E04C 2/04, E04C 2/288, E04C 2/38, E04B 2/00

(54) **PANNEAU MURAL ET PROCÉDÉ DE FABRICATION D'UN TEL PANNEAU MURAL**
WANDPANEEL UND VERFAHREN ZUR HERSTELLUNG EINES SOLCHEN WANDPANEELS
WALL PANEL AND METHOD FOR MANUFACTURING SUCH A WALL PANEL

(30) Priorité: 23.08.2021 FR 2108835
(43) Date de publication de la demande: 03.07.2024
(73) Titulaire: CARBON CAPTURE BUILDINGS GREENTECH, 38270 Beaurepaire (FR)
(72) Inventeur: NOCA, Laurent, 26390 Hauterives (FR)
(74) Mandataire: Talbot, Alexandre
(86) Numéro de dépôt international: PCT/EP2022/073529
(87) Numéro de publication internationale: WO 2023/025826

(56) Documents cités:
- EP-A1- 2 442 002
- EP-A1- 3 854 958
- BE-A- 395 384
- FR-A1- 2 909 695
- FR-A1- 3 004 711
- US-A1- 2020 256 054

## Description

### Domaine technique

L'invention concerne un panneau mural et un procédé de fabrication d'un tel panneau mural.

### État de la technique

Dans la construction d'un bâtiment, il est très important de réaliser des murs qui présentent une isolation thermique importante de manière à améliorer l'efficacité énergétique du bâtiment. La tendance est surtout de réaliser des murs qui possèdent une isolation thermique toujours plus importante avec l'utilisation d'une couche d'isolant thermique toujours plus performante.

Il est également connu de réaliser le gros œuvre d'une construction puis de monter par la suite les couches d'isolant thermique en intérieur et/ou en extérieur. De manière classique, les parois murales sont formées par plusieurs couches qui ont chacune une fonction spécifique. La paroi porteuse est réalisée en maçonnerie avec des blocs de béton ou en coulant du béton ou du béton armé. Par la suite, une ossature est fixée à la paroi porteuse, par vissage ou appliquée contre la paroi porteuse par une fixation sur le plancher ou le plafond. L'ossature forme des niches destinées à recevoir une couche d'isolant thermique et à maintenir la couche d'isolant thermique dans la configuration recherchée. Par la suite, une couche de parement est fixée à l'ossature pour former la paroi interne de façade de la construction et bloquer la couche d'isolant thermique.

L'ossature peut être formée par des rails métalliques ou par des tasseaux de bois qui sont vissés dans la paroi porteuse ou qui sont appliqués contre la paroi porteuse avec d'autres moyens de fixation. L'ossature ne fournit aucun support mécanique structurel. Une solution identique peut être utilisée pour fixer une cloison extérieure munie d'une couche isolante. L'ossature intervient uniquement dans le maintien de la couche d'isolant thermique. Pour la formation d'une cloison intérieure, il est également connu de coller la couche isolante sur la paroi porteuse. **Il** est également connu des murs avec des ossatures bois en caisson ou en compartiments entrecroisés ainsi que des panneaux pleins structuraux (en bois ou béton) avec une couche d'isolant thermique collée. L'ossature forme la structure porteuse et les cavités qui reçoivent la couche d'isolant thermique. Cette configuration de paroi « prête à l'emploi » est limitée dans son utilisation à cause de la tenue mécanique de l'ossature bois et/ou du poids rajouté par les panneaux en béton.

Dans tous les cas, le montage d'une cloison thermiquement isolante en face intérieure ou extérieure après la formation de la paroi porteuse implique un temps de mise en œuvre non négligeable. **Il** est nécessaire de faire intervenir différents corps de métier et de réaliser un échange technique entre les intervenants pour éviter des manipulations qui peuvent endommager la structure et/ou la qualité de l'isolation thermique, de l'isolation à l'air et de l'isolation à l'eau.

**Il** est également connu des éléments préfabriqués qui sont fournis complètement montés sur le chantier. La fourniture d'une structure préfabriquée complète sur le chantier permet d'accélérer le temps de réalisation des chantiers, d'augmenter la qualité, de réduire la pénibilité et d'optimiser l'organisation de chantier avec moins de personnel. L'élément préfabriqué possède un plancher et plusieurs parois latérales. La structure porteuse de l'élément préfabriqué est réalisée intégralement en béton armé ce qui en fait une structure lourde et difficile à installer. Une fois la structure formée, la face intérieure des murs est recouverte par la cloison intérieure de manière à fournir une structure complète « prête à l'emploi » sur le chantier. Comme pour les modes de réalisation précédents, une ossature est fixée sur la structure porteuse pour fixer la couche d'isolant thermique et la couche de parement avant de transporter l'élément préfabriqué.

On peut également citer des configurations dans lesquelles les murs sont des murs double-peau en béton avec une isolation intégrée entre les deux peaux.

Même si les éléments préfabriqués présentent des avantages, ils possèdent de nombreux inconvénients. Il est possible de citer le poids important de la structure qui complique la manipulation des panneaux. Il existe également des difficultés de compatibilité de finitions en surface, de tenue au feu, d'inertie thermique ou de gestion des étanchéités. Tous ces inconvénients limitent très fortement l'incitation à utiliser des panneaux préfabriqués et « prêts à l'emploi ».

Le document FR2909695 divulgue une structure composite pour la fabrication de murs, panneaux ou dalles avec une armature porteuse en bois enrobée par un mélange comportant des particules de renfort, du ciment ou de la chaux.

Le document FR3004711 divulgue un bloc en fibres végétales agglomérées compressé. Le bloc comporte des fibres végétales, un laitier de hauts fourneaux et du ciment. On applique une pression au mélange selon les propriétés et les usages recherchés.

Le document EP2442002 divulgue un flocon isolant qui comprend entre 5 et 80% de fibres de lin et entre 5 et 80% de fibres de chanvre en masse.

Le document BE395384 divulgue un matériau de construction sous la forme d'un bloc, d'une dalle ou d'un carreau. Le matériau de construction possède une âme constituée par une ou plusieurs planches de liège enrobée par un liant formé par du plâtre, du super-ciment et du liège granulé.

Le document EP3854958 divulgue une pièce de clavetage et un procédé d'ancrage d'un panneau bois de construction. Un panneau préfabriqué est réalisé avec un revêtement intérieur formé par une peau en béton armé. Le panneau préfabriqué peut posséder un premier isolant formé par des fibres de bois.

Le document US 2020/0256054 divulgue un panneau préfabriqué en béton qui possède un élément de renfort crénelé recouvert par du béton armé ainsi qu'un cadre formé par des tiges définissant de trous traversant et intégralement noyé dans du béton.

### Exposé de l'invention

Un objet de l'invention consiste à fournir un panneau mural destiné à une construction qui possède un poids limité de manière à faciliter sa manipulation tout en étant compatible avec la réalisation de construction de plusieurs étages et en fournissant des performances accrues vis-à-vis de l'isolation thermique et de la résistance au feu.

On tend à atteindre ce résultat au moyen d'un panneau mural avec les caractéristiques de la revendication 1.

Dans un mode de réalisation particulier, la plaque de liaison est fixée à l'ossature au moyen d'une pluralité de connecteurs. Avantageusement, la plaque de liaison est fixée à tous les tasseaux verticaux. De manière encore plus avantageuse, la plaque de liaison est fixée à tous les tasseaux horizontaux.

Préférentiellement, chaque connecteur possède une zone en saillie disposée à distance de l'ossature, la zone en saillie étant noyée dans la plaque de liaison.

Dans un mode de réalisation avantageux, l'épaisseur du voile est au moins égale à 5cm.

Dans un mode réalisation préférentiel, les plots s'étendent sur au moins 20% de la profondeur de la réservation.

De manière avantageuse, la réservation est remplie par une plaque d'isolant thermique.

Il est intéressant de prévoir que le panneau mural comporte une ossature additionnelle fixée à l'ossature et séparée de la plaque de liaison par l'ossature, l'ossature additionnelle ne comportant que des tasseaux horizontaux, une plaque de parement étant fixée à l'ossature additionnelle.

Préférentiellement, un des tasseaux horizontaux forme une lisse basse, le panneau mural étant en appui porteur sur la lisse basse.

Dans un mode de réalisation avantageux, un des tasseaux horizontaux forme une lisse haute s'étendant continument d'une extrémité à l'autre de la plaque de liaison.

Dans une configuration préférentielle, la plaque de liaison s'étend au-delà de la lisse haute selon la direction verticale.

L'invention a également pour objet une construction qui est facile à réaliser au moyen de panneaux de constructions porteurs préfabriqués.

On tend à atteindre ce résultat au moyen d'une construction comportant un premier panneau mural selon la configuration précédente dans laquelle une dalle est posée sur la lisse supérieure et dans laquelle un deuxième panneau mural selon une des configurations précédentes est posé sur la dalle, la lisse inférieure du deuxième panneau mural étant montée en appui sur la dalle.

Selon un autre aspect, il est proposé un procédé de fabrication d'un panneau mural qui est facile à mettre en œuvre, le procédé ayant les caractéristiques de la revendication 15. On tend à atteindre ce résultat au moyen d'un procédé qui comporte les étapes successives suivantes :
- fournir une ossature munie de tasseaux verticaux en bois et de tasseaux horizontaux, l'ossature définissant des trous, l'ossature possédant une résistance à la compression verticale au moins égale à 15 tonnes par mètre linéaire d'ossature ;
- fournir des plaques d'obstruction ;
- couler un premier mélange d'un matériau durcissable à l'intérieur duquel sont noyés des éléments organiques d'origine végétale, le mélange étant coulé dans un moule à l'intérieur duquel l'ossature est installée avec les plaques d'obstruction remplissant partiellement les trous de l'ossature, le mélange étant coulé pour former une plaque de liaison reliant tous les tasseaux verticaux et tous les tasseaux horizontaux, les éléments organiques d'origine végétale représentant au moins 70% du volume de la plaque de liaison ; dans lequel la plaque de liaison recouvre partiellement et continument les tasseaux verticaux selon un sens de l'épaisseur qui est perpendiculaire à la direction horizontale et perpendiculaire à la direction verticale, la plaque de liaison possédant un voile disposé en saillie de l'ossature selon le sens de l'épaisseur et des plots en saillie du voile, les plots remplissant partiellement la pluralité de réservation, la plaque de liaison possédant une résistance à la compression verticale au moins égale à 1 MPa.

### Description des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre schématiquement une vue éclatée d'un premier mode de réalisation d'un panneau mural ;
- la figure 2 illustre schématiquement une vue en perspective d'une ossature ;
- la figure 3 illustre schématiquement une vue en perspective d'une ossature dont les espaces sont remplis par un isolant thermique ;
- la figure 4 illustre schématiquement une vue en perspective d'une ossature recouverte par une plaque de liaison ;
- la figure 5 illustre schématiquement une vue en coupe d'un panneau mural comportant une plaque de liaison, une ossature et des plaques d'isolant thermique ;
- la figure 6 illustre schématiquement une vue de dessus d'un panneau mural comportant une plaque de liaison, une ossature et des plaques d'isolant thermique ;
- la figure 7 illustre schématiquement une vue en coupe agrandie du panneau mural ;
- la figure 8 illustre schématiquement une vue en coupe d'un panneau mural ;
- la figure 9 illustre schématiquement une vue en perspective d'un panneau mural avec une réservation et monté verticalement ;
- la figure 10 illustre schématiquement une vue en perspective d'un ensemble de panneaux muraux montés verticalement ;
- la figure 11, illustre schématiquement une vue en perspective d'un ensemble de panneaux muraux montés verticalement et recouverts d'une contre-ossature ;
- la figure 12, illustre schématiquement une vue en perspective de deux panneaux muraux montés l'un au-dessus de l'autre ;
- la figure 13, illustre schématiquement une étape de coulage d'un mélange dans un moule comportant une ossature et des plaques d'isolant thermique.

### Description détaillée

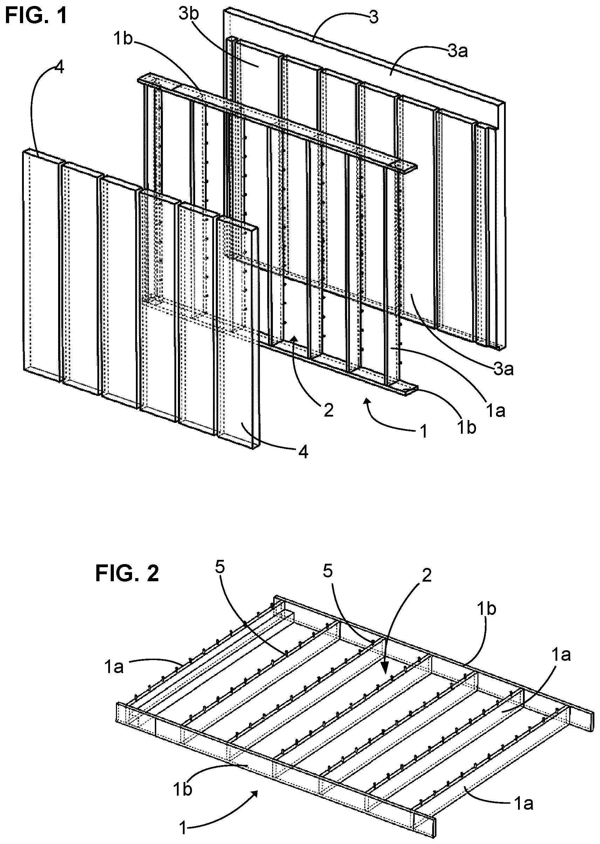

Comme illustré à la figure 1, dans une vue éclatée, le panneau mural comporte une ossature 1 sous la forme de tasseaux verticaux 1a en bois qui sont connectés les uns aux autres par des tasseaux horizontaux 1b. Les tasseaux horizontaux 1b possèdent au moins un rail supérieur et un rail inférieur qui sont fixés aux tasseaux verticaux 1a. Le rail inférieur et le rail supérieur peuvent être indépendamment en bois et/ou en métal. L'ossature 1 fournit une résistance mécanique supérieure à une valeur seuil, notamment une résistance à la compression supérieure à 1 MPa. La valeur seuil recherchée pour l'ossature 1 dépend des performances mécaniques attendues pour le bâtiment à réaliser et notamment le nombre d'étages à supporter. Plus la valeur seuil est élevée et plus l'ossature 1 possède des tasseaux verticaux 1a avec des sections importantes et/ou un nombre important de tasseaux verticaux 1a. Le panneau mural est un panneau mural porteur, c'est-à-dire un panneau mural qui est destiné à supporter un toit et éventuellement un ou plusieurs étages supplémentaires. Le nombre de tasseaux verticaux 1a et la section des tasseaux verticaux 1a varient en fonction des efforts verticaux que doit supporter le panneau mural.

Les tasseaux verticaux 1a en bois sont espacés les uns des autres pour définir une pluralité de réservations 2. Les tasseaux verticaux 1a s'étendent principalement ou exclusivement selon une direction verticale une fois le panneau mural installé. Les tasseaux horizontaux 1b s'étendent principalement ou exclusivement selon une direction horizontale une fois le panneau mural installé.

De manière préférentielle, les tasseaux verticaux 1a possèdent une section minimale qui est supérieure à 1800 mm² et avantageusement supérieure à 3000 mm², et plus préférentiellement ils possèdent une largeur minimale au moins égale 12 mm et avantageusement supérieure à 20 mm, l'épaisseur minimale est au moins égale à 60 mm de préférence au moins égale à 100 mm. La section est mesurée selon un plan horizontal. Une telle section minimale permet de former des tasseaux verticaux 1a qui sont en mesure de supporter plusieurs étages. Les tasseaux verticaux 1a sont en bois et préférentiellement en bois plein ou en lames de bois de type contreplaqué. Pour former un panneau mural porteur qui est destiné à supporter un toit et éventuellement plusieurs étages, il est avantageux de prévoir une ossature dont la résistance à la compression verticale est supérieure ou égale à 15 tonnes par mètre linéaire d'ossature, avantageusement à supérieure ou égale à 20 tonnes par mètre linéaire d'ossature. La longueur de l'ossature est mesurée selon la direction longitudinale des tasseaux horizontaux 1b. L'épaisseur des tasseaux est mesurée perpendiculairement à un plan qui contient la direction verticale et la direction longitudinale des tasseaux horizontaux 1b.

Le panneau mural comporte également une plaque de liaison 3 formée par un premier mélange d'un matériau durcissable à l'intérieur duquel sont noyés des éléments organiques d'origine végétale. La plaque de liaison 3 est une plaque réalisée à partir d'un mélange contenant un matériau durcissable à l'intérieur duquel des éléments organiques d'origine végétale sont noyés. Un élément organique d'origine végétale peut être du bois, de la paille, de la cellulose, des cosses de riz, des copeaux de bambou, du chanvre ou du liège. Un élément organique comprend du carbone obtenu par voie naturelle de manière à avoir un bilan carbone favorable. **Il** est préférable d'utiliser élément organique d'origine végétale qui est majoritairement constitué de bois.

Le mélange comporte au moins 40% volumique d'éléments organiques d'origine végétale ce qui permet de former un mélange ayant une faible densité et ainsi former un panneau mural ayant un poids bien plus faible que son équivalent en béton ou en béton armé. La plaque de liaison 3 possède au moins 70% volumique d'éléments organiques d'origine végétale.

Préférentiellement, les éléments organiques d'origine végétale sont des éléments en bois. Les éléments en bois peuvent être des plaquettes de bois ayant une longueur inférieure à 75 mm, préférentiellement comprise entre 10 et 75 mm, et encore plus préférentiellement entre 20 et 60 mm. Par exemple le béton-bois comprend entre 80 % et 95 %, par rapport à la masse totale des éléments en bois, d'éléments en bois ayant une longueur comprise entre 10 et 60 mm, de préférence entre 20 et 60 mm.

Plus particulièrement, ces plaquettes de bois ont une épaisseur comprise entre 1 mm et 5 mm. Lorsqu'on utilise des plaquettes de bois ayant une longueur entre 20 et 60 mm, on obtient des microcavités en surface du panneau de façade 3a/3b, du fait que le béton enrobe les plaquettes de bois. De telles microcavités facilitent l'adhérence d'un enduit de surface sur la face intérieure et/ou la face extérieure du panneau mural.

Préférentiellement, le matériau apte à durcir comporte un liant hydraulique, c'est-à-dire un liant qui réagit avec l'eau pour durcir. En d'autres termes, pour obtenir le matériau apte à durcir, on mélange le liant hydraulique avec de l'eau. Lors du séchage du matériau, celui-ci durcit par réaction chimique entre le liant et l'eau.

Le liant est par exemple, un ciment ou de la chaux. Par exemple, le matériau apte à durcir est un mortier. Le mortier est réalisé à partir de ciment ou de chaux et peut comprendre ou non du sable. De manière préférentielle, le panneau mural est réalisé en béton-bois, c'est-à-dire un mélange comportant un mortier dans lequel sont noyés des éléments en bois.

La plaque de liaison 3 relie mécaniquement tous les tasseaux verticaux 1a ainsi que les rails supérieur et inférieur 1b de manière à réaliser le contreventement de l'ossature 1. L'association de l'ossature 1 avec la plaque de liaison 3 permet de former un panneau mural qui présente une meilleure résistance en compression que l'ossature 1 seule ainsi que la plaque de liaison 3 seule. Cette solution technique présente un meilleur compromis entre les performances mécaniques, l'encombrement, le poids et les performances thermiques du panneau mural. La plaque de liaison 3 présente une résistance à la compression verticale qui est au moins égale à 1MPa, préférentiellement au moins égale à 2MPa.

L'épaisseur de la plaque de liaison 3 est choisie en fonction des efforts verticaux que doit supporter le panneau mural ainsi qu'en fonction des efforts appliqués par d'éventuels bardages extérieurs et/ou de tout autre élément qui est fixé à la plaque de liaison 3.

L'ossature 1 avec ses tasseaux verticaux 1a en bois possèdent une résistance à la compression selon la direction verticale qui est supérieure à la valeur de résistance à la compression du matériau formant le premier mélange. La valeur de résistance à la compression correspond à la valeur à partir de laquelle le matériau se rompt sous un effort en compression.

La plaque de liaison 3 forme un voile 3a et une pluralité de plots 3b en saillie. Le voile 3a est en saillie d'une face de l'ossature 1. Les plot 3b sont en saillie du voile 3a en direction de l'ossature 1 et ils remplissent partiellement les réservations 2. Les plots 3b s'étendent au-delà du plan défini par la face de l'ossature 1 qui fait l'interface avec le voile 3a. Les plots 3b viennent en contact des faces latérales des tasseaux verticaux et horizontaux de manière à former des plots 3b qui ont une forme identique à la forme des réservations 2 pour améliorer la tenue mécanique du panneau mural. La plaque de liaison 3 est une plaque perspirante. Les plots 3b s'opposent à la déformation de l'ossature 1. Les plots 3b s'enfoncent dans la réservation 2 sur au moins 20% de l'épaisseur de la réservation. L'épaisseur est mesurée selon une direction qui est perpendiculaire au plan défini par la direction longitudinale des tasseaux longitudinaux 1a et la direction horizontale des tasseaux horizontaux 1b. La profondeur d'enfoncement du plot 3b dans la réservation 2 est inférieure à 70% de la profondeur de la réservation 2, avantageusement inférieure à 50% de la profondeur de la réservation 2. **Il** est également avantageux que l'épaisseur de recouvrement entre les plots 3b et l'ossature 1 soit au moins égale à 25% de l'épaisseur de l'ossature 1. Pour former un panneau mural apte à supporter plusieurs étages, il est avantageux que l'épaisseur de recouvrement entre les plots 3b et l'ossature 1 soit au moins égale à 60mm.

**Il** est particulièrement avantageux de réaliser un panneau mural formé par l'ossature 1 et la plaque de liaison 3. Le panneau mural présente une résistance à la compression qui est supérieure ou égale à 2MPa et une résistance au cisaillement qui est au moins égale à 0,5MPa. De telles valeurs permettent d'envisager la construction de bâtiments d'un ou de plusieurs étages, de préférence moins de quatre étages.

L'association de la plaque de liaison 3 avec l'ossature 1 permet de former un panneau mural qui présente une meilleure résistance à la compression que l'ossature 1 seule et que la plaque de liaison 3 seule. Cette association permet de fournir un panneau mural qui est plus léger que son équivalent en béton ou béton armé et qui est plus résistant mécaniquement que son équivalent en ossature bois uniquement.

La plaque de liaison 3 permet de protéger les tasseaux verticaux 1a en bois contre le feu. Le panneau mural possède une meilleure tenue au feu qu'une construction équivalente en bois. En cas d'incendie, la plaque de liaison 3 résiste mieux qu'une plaque en béton et notamment qu'une plaque en béton-armé ce qui permet d'éviter un éclatement du béton. La configuration proposée est plus simple à réaliser

**Il** est particulièrement avantageux de former un panneau mural dont la plaque de liaison 3 présente une densité inférieure à 1200kg/m3 voire inférieure à 1000kg/m3 ou 800kg/m3 afin d'avoir un panneau mural facile à transporter et à installer. Pour obtenir un tel panneau mural, il est intéressant d'utiliser un mélange d'un matériau apte à durcir dans lequel sont noyés des éléments organiques d'origine végétale. De manière préférentielle, le mélange comporte au moins 50% volumique d'éléments organiques d'origine végétale. Avantageusement, le mélange comporte au moins 75% volumique d'éléments organiques d'origine végétale voire au moins 85% volumique d'éléments organiques d'origine végétale. Une telle teneur en éléments organiques d'origine végétal permet de former un panneau mural perspirant à la vapeur d'eau ce qui facilite la formation d'un bâtiment avec une bonne régulation hygrothermique. Une telle teneur en éléments organiques d'origine végétal permet de former un panneau mural qui est poreux mais dont l'épaisseur utilisée permet de former un panneau étanche à la pluie et thermiquement performant.

Dans ces conditions, le panneau mural est particulièrement avantageux par rapport aux autres matériaux connus. **Il** permet de réaliser une structure plus performante qu'une structure équivalente uniquement en bois. Une telle structure est également plus légère et plus résistante aux chocs thermiques qu'une configuration équivalente en béton ou en béton-armé.

Pour la réalisation d'un panneau mural performant, il est important de trouver le meilleur compromis entre les performances mécaniques, l'encombrement du panneau mural, le poids du panneau, la résistivité thermique entre la paroi extérieure et la paroi intérieure ainsi que le déphasage thermique.

L'utilisation de panneaux muraux ayant une épaisseur de plaque de liaison 3 d'au moins 10cm permet également de fournir une bonne absorption phonique ainsi qu'une bonne étanchéité à l'air et à l'eau.

L'utilisation d'un mélange possédant majoritairement en volume des éléments en bois ou des éléments organiques d'origine végétale fait que le panneau mural 3 possède une résistance à la compression avant rupture qui est moins importante qu'un panneau mural équivalent en béton ou en béton armé. **Il** est donc intéressant de renforcer la plaque de liaison 3 au moyen de l'ossature 1 tout en restant plus léger qu'un panneau en béton. La bonne résistance à la compression de la plaque de liaison selon les autres directions en association avec des plots 3b qui prennent appui sur les parois latérales des tasseaux verticaux et horizontaux permet de réaliser un contreventement efficace, de faible poids et avec des bonnes performances thermiques.

La plaque de liaison 3 possède une épaisseur suffisante pour assurer un rôle structurel. L'ossature 1 est installée fixement à la plaque de liaison 3. La plaque de liaison 3 relie mécaniquement chacun des tasseaux verticaux 1a. Les tasseaux verticaux 1a s'étendent verticalement d'une extrémité active à l'autre du panneau mural. Par extrémité active, on entend l'extrémité inférieure qui est posée sur un support ainsi que l'extrémité supérieure qui supporte un toit ou un autre étage. Préférentiellement, la plaque de liaison 3 est fixée directement à tous les tasseaux verticaux 1a. De manière avantageuse, la plaque de liaison 3 est fixée directement à tous les tasseaux horizontaux 1b.

La plaque de liaison 3 possède une épaisseur minimale qui est au moins égale à 5cm, de préférence au moins égale à 8cm de manière à assurer une résistance mécanique à la compression supérieure à une valeur seuil. **Il** est particulièrement avantageux d'avoir une épaisseur inférieure à 50cm, de préférence inférieure à 40cm et encore plus préférentiellement inférieure à 30cm. **Il** est particulièrement avantageux d'avoir une épaisseur de voile 3a qui est au moins égale à 8 cm afin de réaliser un déphasage thermique important entre les deux parois opposées de la plaque de liaison 3. **Il** est avantageux de réaliser un voile 3a ayant une épaisseur comprise entre 0,5 et 1,5 fois l'épaisseur des tasseaux 1a/1b tout en assurant les conditions de recouvrement indiquées plus haut pour fournir un contreventement efficace. **Il** est avantageux que l'épaisseur de voile soit au moins égale à 6 cm, c'est-à-dire que la plaque de liaison 3 fasse saillie de l'ossature d'au moins 6cm de manière à assurer la formation d'un voile 3a qui soit dépourvu d'une fissure se présentant face à un tasseau vertical et/ou face à un tasseau horizontal. Afin de limiter l'encombrement du mur, il est recherché de réduire l'épaisseur de la plaque de liaison 3 de part et d'autre de l'ossature. Cependant, une telle configuration entraine la formation d'une plaque de liaison 3 dont la partie saillante ne possède pas une épaisseur suffisante pour assurer la tenue mécanique recherchée. En utilisant une plaque de liaison 3 qui recouvre partiellement l'ossature 1, c'est-à-dire uniquement partiellement, on peut avoir un meilleur compromis entre l'épaisseur de la plaque de liaison 3, l'encombrement général, la tenue mécanique et le déphasage thermique et/ou les performances phoniques.

La plaque de liaison 3 est préférentiellement plus épaisse que l'ossature 1. L'ossature 1 est saillante d'une face de la plaque de liaison 3 de manière à définir une réservation 2 qui reçoit la plaque d'isolant thermique 4.

Selon les configurations, l'ossature 1 peut se trouver sur la face intérieure ou extérieure de la plaque de liaison 3.

Préférentiellement, le panneau mural comporte encore une ou plusieurs plaques d'isolant thermique 4. Les plaques d'isolant thermique 4 sont installées dans les réservations 2 de l'ossature 1. La plaque d'isolant thermique 4 présente une résistivité thermique qui est supérieure ou égale à la résistivité du matériau béton-bois formant la plaque de liaison 3. La plaque d'isolant thermique 4 présente préférentiellement une masse volumique qui est inférieure à celle du matériau béton-bois et encore préférentiellement inférieure à celle du bois. Les plaques d'isolant thermique 4 permettent d'améliorer la résistance thermique globale du panneau mural. **Il** est avantageux que la somme de l'épaisseur de la plaque d'isolant thermique et du plot 3b en béton-bois soit égale à la hauteur de la réservation 2. Afin d'améliorer la résistance thermique du panneau mural, il est préférable d'installer des plaques isolantes qui sont réalisées dans un matériau thermiquement isolant présentant un rapport résistivité thermique sur la densité (R/d) qui est au moins quatre fois supérieur, de préférence au moins cinq fois supérieur au même rapport du matériau utilisé pour former la plaque de liaison. Un tel matériau présente une bonne résistivité thermique mais de faibles performances mécaniques et une faible valeur de déphasage thermique. L'isolant thermique se présente avantageusement sous la forme d'une laine.

De manière préférentielle, le panneau mural est muni d'une couche de parement (non illustrée) qui est séparée de la plaque de liaison 3 par l'ossature 1 et la plaque d'isolant thermique 4. La plaque de parement peut être une plaque de plâtre. La plaque de parement possède une résistance mécanique avant rupture selon la direction verticale qui est inférieure à celle de l'ossature 1 et inférieure à celle de la plaque de liaison 3. La plaque de parement possède une résistance à la compression qui est au moins cinq fois plus faible que la résistance en compression de l'ossature et au moins deux fois plus faible que la résistance en compression de la plaque de liaison, de préférence au moins cinq fois plus faible. Le poids de la couche de parement représente moins de 5% du poids total du panneau mural.

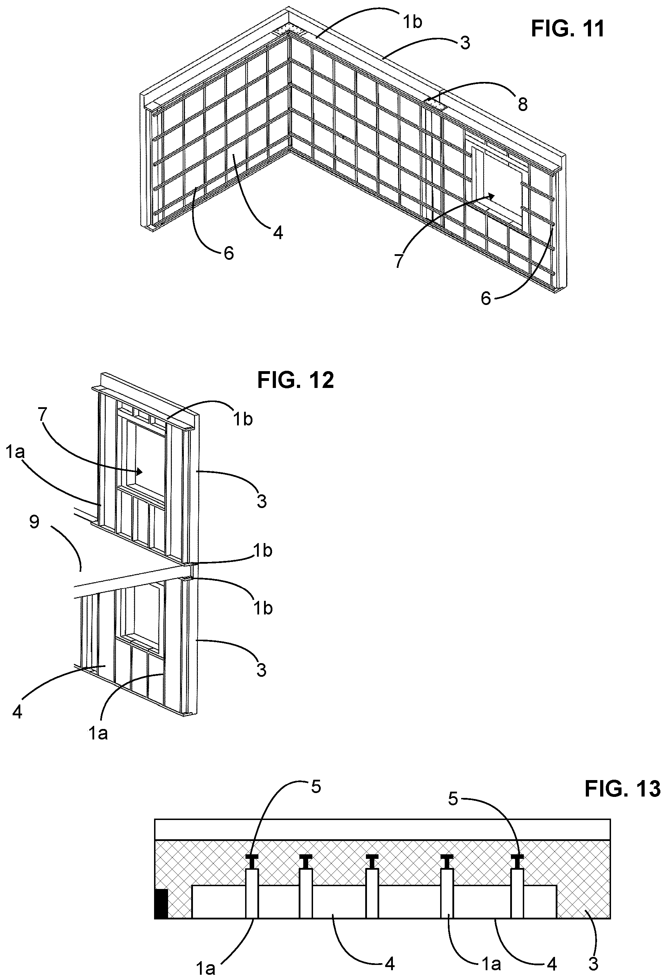

Selon le sens de l'épaisseur du panneau mural, on trouve successivement la couche de parement, la plaque d'isolant thermique 4 et la plaque de liaison 3. Selon le même sens de l'épaisseur, on peut trouver également la couche de parement, les tasseaux verticaux 1a ou horizontaux 1b et la plaque de liaison 3. Dans une autre configuration illustrée à la figure **11****,** une contre-ossature 6 est située entre l'ossature 1 et la plaque de parement.

L'utilisation d'éléments organiques d'origine végétale noyés dans un matériau durcissable permet de former un panneau mural qui présente une bonne résistance au feu et qui forme un bon isolant contre l'élévation de température.

L'association de l'ossature 1 avec la plaque de liaison 3 permet de fournir un panneau mural qui présente un meilleur compromis entre la tenue mécanique minimale à la compression, le poids et l'encombrement.

Dans une configuration, la plaque de parement est fixée directement à l'ossature 1 et notamment aux tasseaux verticaux 1a et plus particulièrement à tous les tasseaux verticaux. En alternative, la plaque de parement est fixée directement à une contre-ossature 6 formée par des tasseaux horizontaux additionnels tels que ceux illustrés à la figure **11** et préférentiellement fixée à tous les tasseaux horizontaux. Préférentiellement, les tasseaux horizontaux sont réalisés en métal ou en bois. Les tasseaux horizontaux de la contre-ossature 6 sont fixés aux tasseaux verticaux 1a.

L'utilisation d'une contre-ossature 6 munie de tasseaux horizontaux permet de désolidariser la plaque de parement et l'ossature 1 ce qui protège la plaque de parement lorsque l'ossature 1 se déforme sous les efforts exercés verticalement. Cela évite la reprise des efforts par la plaque de parement pour éviter la rupture de la plaque de parement.

Dans un mode de réalisation particulier, une pluralité de connecteurs 5 est fixée à chaque tasseau vertical 1a et/ou tasseau horizontal 1b. Chaque connecteur 5 possède une zone à section élargie disposée à distance de l'ossature 1. La zone à section élargie est noyée dans la plaque de liaison 3. Les connecteurs 5 forment des dispositifs de clavetage qui favorisent l'accrochage entre la plaque de liaison 3 et l'ossature 1. Préférentiellement, les connecteurs 5 sont noyés dans le voile 3a de la plaque de liaison 3 qui possède une épaisseur au moins égale à 5cm. Le voile 3a possède une épaisseur au moins égale à 5 cm. Les connecteurs 5 sont préférentiellement réalisés en matériau métallique, par exemple sous la forme de vis dont la tête sert de zone élargie assurant la fixation mécanique entre la plaque de liaison 3 et l'ossature 1. Le voile 3a s'étend selon une direction perpendiculaire à distance de l'ossature 1. L'ossature 1 est posée sur une face du voile en béton-bois sans s'enfoncer dans le voile en béton-bois. Dans une alternative, les tasseaux verticaux 1a et/ou les tasseaux horizontaux 1b sont texturés de manière à être indémontables de la plaque de liaison 3.

Le plot 3a permet de rigidifier le panneau mural. Cela permet de reprendre une partie des efforts horizontaux pour renforcer le contreventement de l'ossature 1 et réduire la déformation de la paroi murale. De tels efforts horizontaux peuvent apparaitre lorsque la vitesse du vent devient importante et/ou lors de tremblements de terre.

Dans une configuration particulièrement avantageuse, les tasseaux verticaux 1a sont montés sur un voile 3a qui possède une épaisseur au moins égale à 5cm, de préférence au moins égale à 8cm. Le voile 3a peut présenter des évidements pour l'installation des menuiseries. Le voile 3a relie mécaniquement les plots 3b en béton-bois pour renforcer la tenue mécanique du panneau mural.

De manière préférentielle, les espaces qui existent entre les tasseaux verticaux 1a sont partiellement remplis par des plaques de l'isolant thermique 4. **Il** est avantageux que l'épaisseur des tasseaux verticaux 1a soit supérieure ou égale à la somme de l'épaisseur des plots 3b de béton-bois et de l'épaisseur de la plaque d'isolant thermique 4. Préférentiellement, l'épaisseur des tasseaux verticaux 1a est égale à la somme de l'épaisseur des plots de béton-bois 3a et de l'épaisseur de la plaque d'isolant thermique 4. Dans une configuration avantageuse, l'espace défini entre tasseaux verticaux est intégralement rempli par les plots 3b en béton-bois et les plaques en isolant thermique 4.

La plaque d'isolant thermique 4 présente une résistivité thermique qui est supérieure à la résistivité thermique du matériau formant la plaque de liaison 3. L'association de la plaque de liaison 3 et de la plaque d'isolant thermique 4 permet de fournir un panneau mural avec une résistance thermique améliorée, à épaisseur équivalente.

Avantageusement, la pluralité de tasseaux horizontaux 1b comporte une lisse haute s'étendant continument d'une extrémité à l'autre de la plaque de liaison 3.

Il est également avantageux que le panneau mural possède une lisse basse qui est formée par un des tasseaux horizontaux 1b de l'ossature 1.

De manière préférentielle, une seconde pluralité de connecteurs est fixée à la lisse haute, chaque connecteur possède une zone en saillie disposée à distance de la lisse haute, la zone en saillie étant noyée dans le voile 3a.

L'utilisation de tels panneaux muraux ayant une épaisseur de plaque de liaison 3 d'au moins 10cm permet de former une inertie thermique qui est estimée à environ 0,6h/cm et une capacité thermique massique qui est supérieure à 1000J/Kg/K.

Les panneaux muraux sont autoportants, et ils possèdent une tenue structurelle supérieure à une valeur seuil de manière à pouvoir supporter plusieurs étages montés sur eux, il a été observé que cette configuration de panneaux muraux permet la formation de constructions possédant cinq niveaux, c'est-à-dire un rez-de-chaussée et quatre étages.

Afin de fournir une plaque de liaison 3 plus performante mécaniquement et thermiquement, le voile 3a de béton-bois et les plots 3b appartiennent à une même pièce monolithique et indémontable. Préférentiellement, ils sont formés simultanément lors d'une même étape de moulage.

La fabrication du panneau mural peut comporter les étapes successives suivantes. Une ossature 1 est fournie qui possède les futurs tasseaux verticaux 1a. Les tasseaux verticaux 1a sont préférentiellement fixés les uns aux autres au moyen d'un ou plusieurs tasseaux horizontaux 1b, préférentiellement au moins deux tasseaux horizontaux 1b de manière à former un cadre procurant une certaine tenue mécanique. Un moule est fourni et destiné à recevoir l'ossature 1.

Une pluralité de plaques d'obturation, préférentiellement des plaques 4 de matériau isolant thermiquement est installée dans l'ossature 1. De préférence, les plaques d'obturation remplissent chacune des cavités existantes dans l'ossature. Comme indiqué plus haut, il est avantageux que les plaques d'isolant thermique 4 ne remplissent pas complètement la cavité de manière à permettre la formation d'un plot en béton-bois 3a.

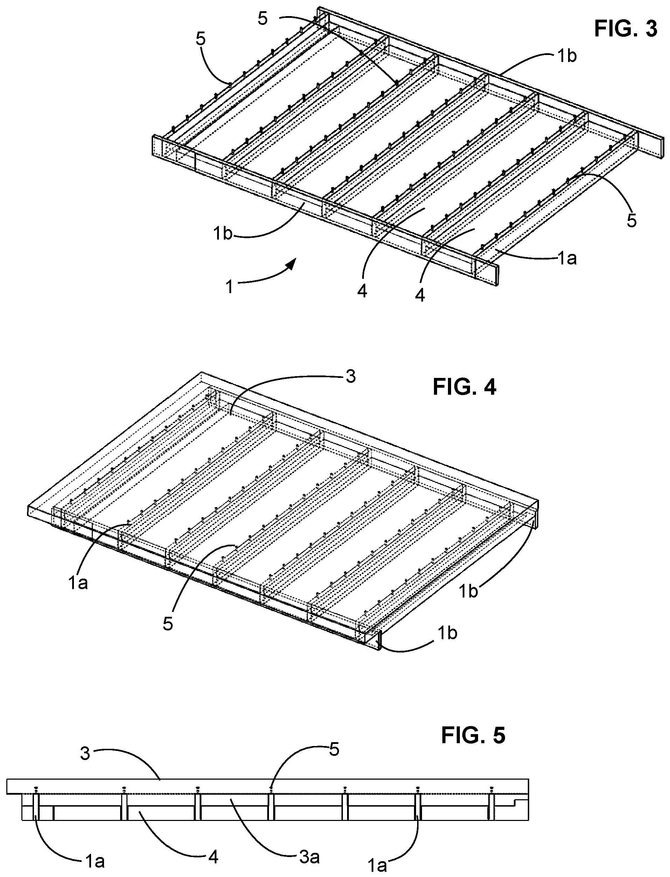

Comme illustré aux figures 2 et 3, l'ossature 1 est surmontée par une pluralité de connecteurs 5, par exemple des connecteurs 5 vissés dans les tasseaux verticaux 1a.

Un mélange d'un matériau durcissable à l'intérieur duquel sont noyés des éléments organiques d'origine végétal est coulé dans le moule qui contient l'ossature 1 et les plaques d'obturation. Une fois que le mélange a durci, le panneau mural illustré à la figure 4 peut être extrait hors du moule. En alternative, la plaque d'isolant thermique 4 replie partiellement les trous et est conservée.

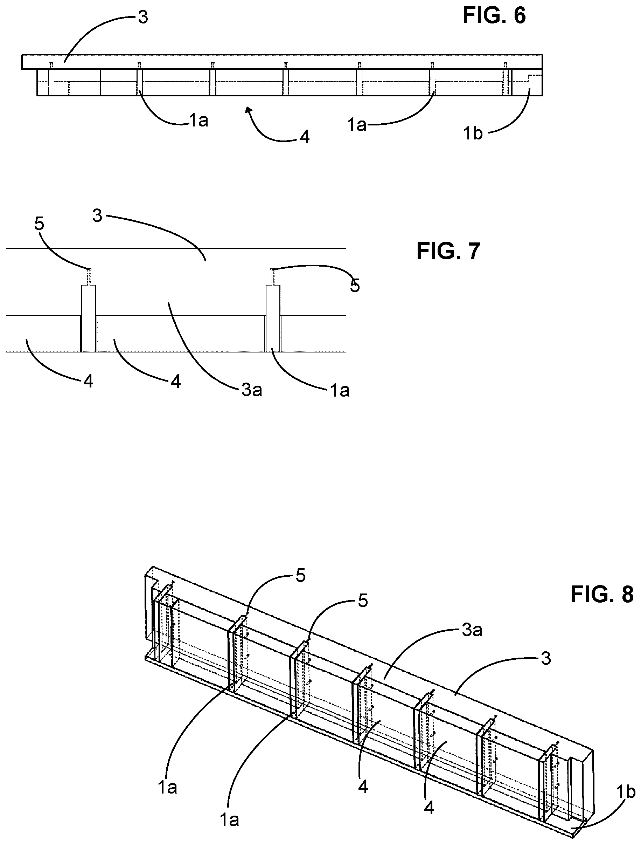

Les figures 5 et 8 illustrent une vue en coupe du panneau mural. Une face du panneau mural est formée par l'ossature 1 et les plaques d'isolant thermique 4. L'autre face est formée par la plaque de liaison 3. Les connecteurs 5 fixés à l'ossature 1 sont noyés dans la plaque de liaison 3 sans traverser la plaque de liaison 3. Les connecteurs 5 assurent la transmission mécanique des efforts entre l'ossature 1 et la plaque de liaison 3.

Les plots de béton-bois 3a et les plaques d'isolant thermique 4 remplissent l'espace à l'intérieur de l'ossature 1 de manière à améliorer la résistance thermique sans augmenter l'encombrement du panneau mural.

La figure 6 illustre une vue de dessus du panneau mural. **Il** est particulièrement avantageux que le panneau mural possède une lisse haute et une lisse basse qui soient formées par des tasseaux transversaux 1b de l'ossature 1. En alternative, la lisse haute et la lisse basse sont directement fixées à l'ossature 1 pour faciliter la transmission des efforts.

**Il** est également avantageux que la lisse haute soit destinée à supporter la dalle du niveau supérieur comme cela est illustré schématiquement à la figure 12.

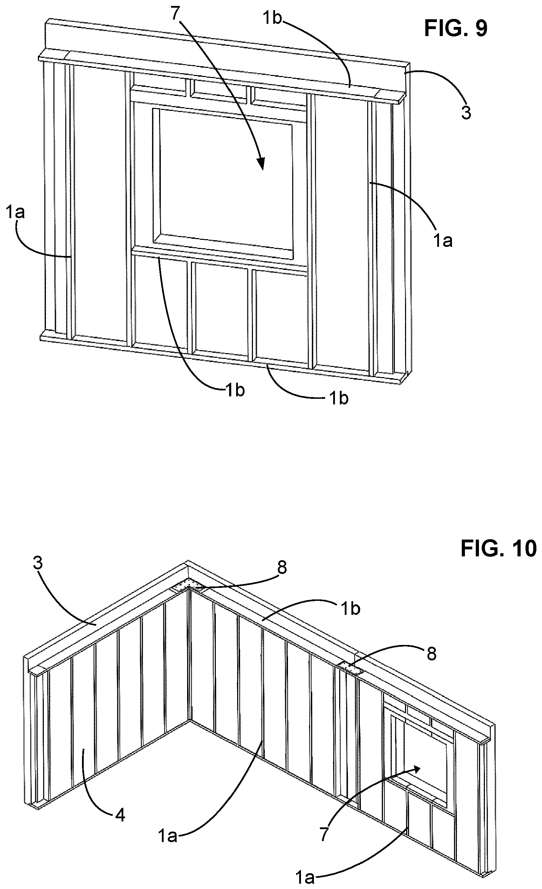

Comme indiqué plus haut, il est avantageux que le panneau mural soit dépourvu de trou traversant de manière à fournir des performances mécaniques et thermiques optimales. Cependant, comme illustré à la figure 9, il est également possible de prévoir que le panneau mural possède une réservation 7 qui peut recevoir une fenêtre, une baie-vitrée, une porte ou tout autre élément adapté. Afin de procurer une tenue mécanique adaptée, il est avantageux de prévoir que l'ossature possède des tasseaux horizontaux 1b qui vont supporter l'élément installé.

Lors de la formation du panneau mural, il est avantageux de remplir une partie du moule avec un élément d'obstruction pour définir la réservation. **Il** est également avantageux de ne pas utiliser de plaque d'isolant thermique 4 dans cette zone. Comme la plaque de liaison 3 se découpe facilement, il est possible d'adapter les dimensions du trou traversant aux besoins, au dernier moment.

De manière préférentielle, le voile 3a en béton-bois dépasse au-delà de l'ossature **1. Il** est avantageux que le voile 3a vienne à l'aplomb de l'ossature sur une extrémité et qu'il dépasse de l'ossature sur l'extrémité opposée selon la direction horizontale et/ou verticale. Une telle configuration permet de faciliter l'association des panneaux muraux pour former une construction.

De manière préférentielle, différentes formes de panneaux muraux sont réalisées de manière à définir des panneaux muraux pour former des coins, des terminaisons de murs ou des continuités de murs. La figure 10 illustre une construction qui comportent trois panneaux muraux fixés les uns aux autres. Deux panneaux muraux forment un coin, de préférence un coin à 90°. Deux des panneaux muraux sont installés dans la continuité de leurs faces latérales.

De manière avantageuse, les panneaux muraux sont fixés les uns aux autres par leurs tasseaux horizontaux 1b et préférentiellement par les lisses hautes et/ou basses comme cela est illustré aux figures 10 et 11. Dans les modes de réalisation illustrés aux figures 10 et 11, les panneaux muraux sont fixés deux à deux au moyen d'un élément fixant 8, par exemple par une platine métallique associée à des vis, des boulons, des rivets ou tout autre moyen équivalent.

En alternative ou en complément, deux panneaux muraux adjacents d'un même niveau sont fixés l'un à l'autre au moyen d'un montant en bois. Les deux ossatures en bois 1 sont fixées au montant en bois.

De manière particulièrement avantageuse, une fois les panneaux muraux fixés les uns aux autres, les panneaux sont solidarisés au moyen de la contre-ossature 6 qui s'étend sur au moins deux panneaux montés dans la continuité de leurs faces latérales, c'est-à-dire avec des faces latérales qui ne forment qu'un seul plan extérieur ou intérieur.

Il est préférable de réaliser un élément d'étanchéité qui relie la plaque de liaison inférieure avec la plaque de liaison supérieur. L'étanchéité peut être obtenue au moyen d'une couche de mortier-colle. Il est également avantageux d'utiliser un élément d'étanchéité qui connecte deux panneaux muraux adjacents d'un même niveau.

La figure 12, illustre une partie d'une construction où deux panneaux muraux sont montés l'un sur l'autre. Une dalle 9 est présente entre les deux panneaux muraux. La dalle 9 est montée en appui sur l'ossature 1 de sorte que les contraintes appliquées par la dalle 9 sont majoritairement reprises par l'ossature 1. Dans l'exemple illustré, la dalle 9 est posée sur la lisse supérieure du panneau mural inférieur. La lisse inférieure du panneau mural supérieur est en appui sur la dalle 9.

Afin d'améliorer les performances thermiques de la construction, la plaque de liaison 3 des panneaux muraux inférieur et supérieur se rejoignent et les deux panneaux muraux définissent une rainure destinée à recevoir la dalle 9. Comme illustré sur les figures 1, 9, 10, 11 et 12, la plaque de liaison 3 s'étend verticalement au-delà de la lisse supérieure de manière à fournir une isolation sur une partie de la hauteur de la dalle, la hauteur étant mesurée verticalement dans la construction. Il est également avantageux que la plaque de liaison 3 s'étende en dessous de la lisse inférieure pour recouvrir une partie de la dalle. Les plaques de béton-bois des deux panneaux muraux sont montées l'une au-dessus de l'autre et se rejoignent pour former une couche d'isolation thermique qui bloque une partie du flux thermique entre la dalle et l'extérieur de la construction.

Le matériau béton-bois étant plus facile à découper que le béton, il est facile de définir la forme de la plaque de liaison 3 pour s'adapter aux aléas de fabrication ou à des impondérables. A titre d'exemple, les panneaux muraux sont réalisés, par défaut, avec une plaque de liaison 3 qui s'étend sous la lisse inférieure et au-dessus de la lisse supérieure. L'extension de la plaque de liaison 3 au-delà de la lisse inférieure est découpée pour former le panneau mural inférieur qui est déposé sur un support, par exemple sur une dalle comme cela est illustré à la figure 12.

De manière avantageuse, la dalle 9 est coulée en utilisant la lisse supérieure et la partie saillante de la plaque de liaison 3 pour former une partie du moule de la dalle 9. La figure 13 illustre le coulage d'un mélange dans un moule à l'intérieur duquel sont installés l'ossature 1 et les plaques d'isolant thermique 4.

La construction possède un premier niveau qui possède un anneau formé par une pluralité de panneaux muraux tels que ceux décrits précédemment. Une dalle 9 est coulée dans une moule. Le pourtour du moule est formé par les lisses supérieures et l'extrémité supérieure des plaques de béton-bois 3. De cette manière, le mélange de béton formant la dalle s'étend jusqu'aux extrémités des panneaux muraux.

Lorsque la dalle 9 est coulée directement sur les sommets des panneaux muraux, il est avantageux de fixer des connecteurs 5 sur la lisse supérieure 1b.

En alternative, la dalle 9 peut être réalisée de manière préfabriquée. Une fois la dalle 9 sèche, cette dernière est posée sur le sommet de l'ossature 1. La dalle 9 est préférentiellement fixée à l'ossature 1.

Dans une alternative de réalisation, les plaques d'isolant thermique 4 ne sont pas dans les trous de l'ossature 1 lors du coulage du mélange. Une fois le panneau mural installé, les plaques d'isolant thermique 4 sont montées dans les trous de l'ossature 1. Des plaques d'obstruction sont installées dans le moule pour remplir les réservations 2 de l'ossature 1 lors du coulage du mélange.

Une fois le panneau mural extrait hors du moule, il est possible de remplacer les plaques d'obstruction par les plaques d'isolant thermique 4.

Le panneau mural est particulièrement avantageux car avec une épaisseur limitée, il est en mesure de fournir une résistance thermique importante. L'association astucieuse de l'ossature 1 et de la plaque de liaison 3 permet de fournir une bonne résistance mécanique pour des constructions de quelques étages tout en étant facile à construire, économique et de poids limité.

L'utilisation d'une plaque de liaison 3 permet de fournir une bonne résistance au feu et protège au moins en partie l'ossature 1.

## Revendications

1. Panneau mural porteur comportant :
- une ossature (1) munie d'une pluralité de tasseaux verticaux (1a) en bois s'étendant principalement selon une direction verticale et d'une pluralité de tasseaux horizontaux (1b) s'étendant principalement selon une direction horizontale, chaque tasseau vertical (1a) étant fixé à au moins deux des tasseaux horizontaux (1b), l'ossature (1) présentant une première épaisseur selon une première direction perpendiculaire à la direction verticale et perpendiculaire à la direction horizontale, l'ossature (1) définissant une pluralité de réservations (2) sous la forme de trous traversants selon la première direction ;
- une plaque de liaison (3) formée par un premier mélange comportant un matériau durcissable à l'intérieur duquel sont noyés des éléments organiques d'origine végétale, la plaque de liaison (3) reliant tous les tasseaux verticaux (1a) et tous les tasseaux horizontaux (1b), **caractérisé en ce que** les éléments organiques d'origine végétale représentent au moins 70% du volume de la plaque de liaison (3) ; **en ce que** la plaque de liaison (3) recouvre uniquement partiellement et continument les tasseaux verticaux (1a) selon un sens de l'épaisseur qui est perpendiculaire à la direction horizontale et perpendiculaire à la direction verticale ;
**en ce que** la plaque de liaison (3) possède un voile (3a) disposé en saillie de l'ossature (1) selon la première direction et des plots (3b) en saillie du voile (3a) et s'enfonçant dans les réservations pour définir une zone recouverte par le premier mélange et une zone dépourvue de recouvrement par le premier mélange, les plots (3b) s'enfonçant dans la pluralité de réservations (2) sur au moins 20% de la profondeur de la pluralité de réservations (2) et moins de 70% de la profondeur de la pluralité de réservations (2) de sorte que la plaque de liaison (3) et l'ossature (1) définissent une pluralité de trous non-débouchant, la plaque de liaison (3) possédant une résistance à la compression verticale au moins égale à 1 MPa.

2. Panneau mural selon la revendication 1 dans lequel la plaque de liaison (3) s'étend de l'ossature (1) sur une distance au moins égale à 6cm.

3. Panneau mural selon l'une des revendications 1 et 2 dans lequel la plaque de liaison (3) est fixée à l'ossature (1) au moyen d'une pluralité de connecteurs (5).

4. Panneau mural selon la revendication 3 dans lequel la plaque de liaison (3) est fixée directement à tous les tasseaux verticaux (1a).

5. Panneau mural selon la revendication 4 dans lequel la plaque de liaison (3) est fixée directement à tous les tasseaux horizontaux (1b).

6. Panneau mural selon l'une quelconques des revendications 3 à 5 dans lequel chaque connecteur (5) possède une zone en saillie disposée à distance de l'ossature (1), la zone en saillie étant noyée dans la plaque de liaison (3).

7. Panneau mural selon l'une des revendications précédentes dans lequel l'épaisseur du voile (3a) est au moins égale à 5cm.

8. Panneau mural selon l'une des revendications précédentes dans lequel les plots (3b) s'étendent sur au moins 25% de la profondeur de la réservation (2) et pas plus de 50% de la profondeur de la réservation (2).

9. Panneau mural selon l'une quelconque des revendications précédentes dans lequel la réservation (2) est remplie par une plaque d'isolant thermique (4) qui présente un rapport résistivité thermique sur densité au moins quatre fois supérieur au rapport résistivité thermique sur densité du matériau formant la plaque de liaison (3).

10. Panneau mural selon l'une quelconque des revendications précédentes comportant une ossature additionnelle (6) fixée à l'ossature (1) et séparée de la plaque de liaison (3) par l'ossature (1), l'ossature additionnelle (6) ne comportant que des tasseaux horizontaux, une plaque de parement étant fixée à l'ossature additionnelle (6).

11. Panneau mural selon la revendication précédente dans lequel un des tasseaux horizontaux (1b) forme une lisse basse, le panneau mural étant en appui porteur sur la lisse basse.

12. Panneau mural selon l'une des revendications précédentes dans lequel un des tasseaux horizontaux (1b) forme une lisse haute s'étendant continument d'une extrémité à l'autre de la plaque de liaison (3).

13. Panneau mural selon la revendication précédente dans lequel la plaque de liaison (3) s'étend au-delà de la lisse haute selon la direction verticale.

14. Construction comportant un premier panneau mural selon la revendication précédente dans laquelle une dalle (9) est posée sur la lisse haute (1b) et dans laquelle un deuxième panneau mural selon la revendication 10 est posé sur la dalle (9), une lisse basse (1b) du deuxième panneau mural étant montée en appui sur la dalle (9).

15. Procédé de fabrication d'un panneau mural selon l'une quelconque des revendications 1 à 13 comportant les étapes successives suivantes :
- fournir une ossature (1) munie de tasseaux verticaux (1a) en bois et de tasseaux horizontaux, l'ossature (1) définissant des trous ;
- fournir des plaques d'obstruction ;
- couler un premier mélange d'un matériau durcissable à l'intérieur duquel sont noyés des éléments organiques d'origine végétale, le mélange étant coulé dans un moule à l'intérieur duquel l'ossature (1) est installée avec les plaques d'obstruction remplissant partiellement les trous (2) de l'ossature (1) pour former des réservations (2), le mélange étant coulé pour former une plaque de liaison (3) reliant tous les tasseaux verticaux (1a) et tous les tasseaux horizontaux (1b), les éléments organiques d'origine végétale représentant au moins 70% du volume de la plaque de liaison (3) ; dans lequel la plaque de liaison (3) recouvre partiellement et continument les tasseaux verticaux (1a) selon un sens de l'épaisseur qui est perpendiculaire à la direction horizontale et perpendiculaire à la direction verticale, la plaque de liaison (3) possédant un voile (3a) disposé en saillie de l'ossature (1) selon le sens de l'épaisseur et des plots (3b) en saillie du voile (3a), les plots (3b) remplissant partiellement la pluralité de réservation (2), la plaque de liaison (3) possédant une résistance à la compression verticale au moins égale à 1 MPa.

## Patentansprüche

1. Tragendes Wandpaneel, umfassend:
- eine Tragkonstruktion (1), die mit einer Vielzahl von vertikalen Holzleisten (1a) versehen ist, die sich hauptsächlich in einer vertikalen Richtung erstrecken, und mit einer Vielzahl von horizontalen Leisten (1b), die sich hauptsächlich in einer horizontalen Richtung erstrecken, wobei jede vertikale Leiste (1a) an mindestens zwei der horizontalen Leisten (1b) befestigt ist, wobei die Tragkonstruktion (1) eine erste Dicke in einer ersten Richtung aufweist, die senkrecht zur vertikalen Richtung und senkrecht zur horizontalen Richtung steht, wobei die Tragkonstruktion (1) in der ersten Richtung eine Vielzahl von Ausnehmungen (2) in Form von Durchgangslöchern definiert;
- eine Verbindungsplatte (3), die aus einer ersten Mischung gebildet ist, die ein härtbares Material umfasst, in welchem organische Bestandteile pflanzlichen Ursprungs eingebettet sind, wobei die Verbindungsplatte (3) alle vertikalen Leisten (1a) und alle horizontalen Leisten (1b) verbindet,
**dadurch gekennzeichnet, dass** die organischen Bestandteile pflanzlichen Ursprungs mindestens 70 % des Volumens der Verbindungsplatte (3) ausmachen;
dass die Verbindungsplatte (3) nur die vertikalen Leisten (1a) teilweise und durchgehend in einer Dickenrichtung bedeckt, die senkrecht zur vertikalen Richtung und senkrecht zur horizontalen Richtung steht;
dass die Verbindungsplatte (3) eine Wand (3a) aufweist, der in der ersten Richtung von der Tragkonstruktion (1) vorspringend angeordnet ist, und Vorsprünge (3b), die von der Wand (3a) vorspringen und in die Ausnehmungen eindringen, um einen von der ersten Mischung bedeckten Bereich und einen von der ersten Mischung unbedeckten Bereich zu definieren,
wobei die Vorsprünge (3b) um mindestens 20 % der Tiefe der Vielzahl von Ausnehmungen (2) und weniger als 70 % der Tiefe der Vielzahl von Ausnehmungen (2) in die Vielzahl von Ausnehmungen (2) eindringen, sodass die Verbindungsplatte (3) und die Tragkonstruktion (1) eine Vielzahl von Sacklöchern definieren, wobei die Verbindungsplatte (3) eine vertikale Druckfestigkeit von mindestens 1 MPa aufweist.

2. Wandpaneel nach Anspruch 1, wobei die Verbindungsplatte (3) sich über eine Entfernung von mindestens 6 cm von der Tragkonstruktion (1) erstreckt.

3. Wandpaneel nach einem der Ansprüche 1 und 2, wobei die Verbindungsplatte (3) durch eine Vielzahl von Verbindungselementen (5) an der Tragkonstruktion (1) befestigt ist.

4. Wandpaneel nach Anspruch 3, wobei die Verbindungsplatte (3) direkt an allen vertikalen Leisten (1a) befestigt ist.

5. Wandpaneel nach Anspruch 4, wobei die Verbindungsplatte (3) direkt an allen horizontalen Leisten (1b) befestigt ist.

6. Wandpaneel nach einem der Ansprüche 3 bis 5, wobei jedes Verbindungselement (5) einen vorspringenden Bereich aufweist, der von der Tragkonstruktion (1) beabstandet angeordnet ist, wobei der vorspringende Bereich in der Verbindungsplatte (3) versenkt ist.

7. Wandpaneel nach einem der vorherigen Ansprüche, wobei die Dicke der Wand (3a) mindestens 5 cm beträgt.

8. Wandpaneel nach einem der vorherigen Ansprüche, wobei die Vorsprünge (3b) sich auf mindestens 25 % der Tiefe der Ausnehmung (2) und nicht mehr als 50 % der Tiefe der Ausnehmung (2) erstrecken.

9. Wandpaneel nach einem der vorherigen Ansprüche, wobei die Ausnehmung (2) mit einer Wärmedämmplatte (4) gefüllt ist, die ein Verhältnis von Wärmewiderstand zu Dichte aufweist, das mindestens viermal so groß ist wie das Verhältnis von Wärmewiderstand zu Dichte des Materials, aus dem die Verbindungsplatte (3) gebildet ist.

10. Wandpaneel nach einem der vorherigen Ansprüche, umfassend eine zusätzliche Tragkonstruktion (6), die an der Tragkonstruktion (1) befestigt ist und durch die Tragkonstruktion (1) von der Verbindungsplatte (3) getrennt ist, wobei die zusätzliche Tragkonstruktion (6) nur horizontale Leisten aufweist und eine Verkleidungsplatte an der zusätzlichen Tragkonstruktion (6) befestigt ist.

11. Wandpaneel nach dem vorherigen Anspruch, wobei eine der horizontalen Leisten (1b) eine untere Leiste bildet, wobei das Wandpaneel auf der unteren Leiste in tragender Auflage ist.

12. Wandpaneel nach einem der vorherigen Ansprüche, wobei eine der horizontalen Leisten (1b) eine obere Leiste bildet, die sich durchgehend von einem Ende der Verbindungsplatte (3) zum anderen erstreckt.

13. Wandpaneel nach dem vorherigen Anspruch, wobei die Verbindungsplatte (3) sich in der vertikalen Richtung über die obere Leiste hinaus erstreckt.

14. Konstruktion, umfassend ein erstes Wandpaneel nach dem vorherigen Anspruch, in welcher auf der oberen Leiste (1b) eine Bodenplatte (9) aufgelegt ist, und in welcher auf der Bodenplatte (9) ein zweites Wandpaneel nach Anspruch 10 aufgelegt ist, wobei eine untere Leiste (1b) des zweiten Wandpaneels auf der Bodenplatte (9) in Auflage montiert ist.

15. Verfahren zur Herstellung eines Wandpaneels nach einem der Ansprüche 1 bis 13, umfassend die folgenden Schritte:
- Bereitstellen einer Tragkonstruktion (1), die mit vertikalen Holzleisten (1a) und horizontalen Leisten versehen ist, wobei die Tragkonstruktion (1) Löcher definiert;
- Bereitstellen von Abdeckplatten;
- Gießen einer ersten Mischung aus einem härtbaren Material, in welchem organische Bestandteile pflanzlichen Ursprungs eingebettet sind, wobei die Mischung in eine Form gegossen wird, in der die Tragkonstruktion (1) mit den Abdeckplatten installiert ist, die die Löcher (2) der Tragkonstruktion (1) teilweise ausfüllen, um Ausnehmungen (2) zu bilden, wobei die Mischung gegossen wird, um eine Verbindungsplatte (3) zu bilden, die alle vertikalen Leisten (1a) und alle horizontalen Leisten (1b) verbindet, wobei die organischen Bestandteile pflanzlichen Ursprungs mindestens 70 % des Volumens der Verbindungsplatte (3) ausmachen; wobei die Verbindungsplatte (3) die vertikalen Leisten (1a) in einer Dickenrichtung, die senkrecht zur horizontalen Richtung und senkrecht zur vertikalen Richtung steht, teilweise und durchgehend bedeckt, wobei die Verbindungsplatte (3) eine in der Dickenrichtung von der Tragkonstruktion (1) vorspringend angeordnete Wand (3a) aufweist, und Vorsprünge (3b), die von der Wand (3a) vorspringen, wobei die Vorsprünge (3b) die Vielzahl von Ausnehmungen (2) teilweise ausfüllen und die Verbindungsplatte (3) eine vertikale Druckfestigkeit von mindestens 1 MPa aufweist.

## Claims

1. Supporting wall panel comprising:
- a frame (1) provided with a plurality of vertical battens (1a) made from wood extending mainly in a vertical direction and a plurality of horizontal battens (1b) extending mainly in a horizontal direction, each vertical batten (1a) being fixed to at least two of the horizontal battens (1b), the frame (1) having a first thickness in a first direction perpendicular to the vertical direction and perpendicular to the horizontal direction, the frame (1) defining a plurality of re-entrants (2) in the form of through-holes in the first direction;
- a connecting plate (3) formed by a first mixture comprising a curable material in which organic plant-derived elements are embedded, the connecting plate (3) connecting all the vertical battens (1a) and all the horizontal battens (1b); **characterised in that** the organic plant-derived elements represent at least 70% of the volume of the connecting plate (3);
**in that** the connecting plate (3) only partially and continuously overlaps the vertical battens (1a) in a thickness direction that is perpendicular to the horizontal direction and perpendicular to the vertical direction;
and **in that** the connecting plate (3) has a shell (3a) arranged salient from the frame (1) in the thickness direction and studs (3b) salient from the shell (3a) and extending into the re-entrants to define an area covered by the first mixture and an area not covered by the first mixture, the studs (3b) extending into the plurality of re-entrants (2) to a depth of at least 20% of the depth of the plurality of re-entrants (2) and less than 70% of the depth of the plurality of re-entrants (2), such that the connecting plate (3) and the frame (1) define a plurality of blind holes, the connecting plate (3) having a vertical compressive strength at least equal to 1 MPa.

2. Wall panel according to claim 1 wherein the connecting plate (3) extends out from the frame (1) over a distance at least equal to 6cm.

3. Wall panel according to one of claims 1 and 2 wherein the connecting plate (3) is fixed to the frame (1) by means of a plurality of connectors (5).

4. Wall panel according to claim 3 wherein the connecting plate (3) is fixed directly to all the vertical battens (1a).

5. Wall panel according to claim 4 wherein the connecting plate (3) is fixed directly to all the horizontal battens (1b).

6. Wall panel according to any one of claims 3 to 5 wherein each connector (5) has a salient area located at a distance from the frame (1), the salient area being embedded in the connecting plate (3).

7. Wall panel according to one of the foregoing claims wherein the thickness of the shell (3a) is at least equal to 5cm.

8. Wall panel according to one of the foregoing claims wherein the studs (3b) extend over at least 25% of the depth of the re-entrant (2) and no more than 50% of the depth of the re-entrant (2).

9. Wall panel according to any one of the foregoing claims wherein the re-entrant (2) is filled by a thermal insulation plate (4) that presents a thermal resistivity over density ratio at least four times higher than the thermal resistivity over density ratio of the material forming the connecting plate (3).

10. Wall panel according to any one of the foregoing claims comprising an additional frame (6) fixed to the frame (1) and separated from the connecting plate (3) by the frame (1), the additional frame (6) only comprising horizontal battens, a facing plate being fixed to the additional frame (6).

11. Wall panel according to the foregoing claim wherein one of the horizontal battens (1b) forms a bottom wall plate, the wall panel being installed bearing on the bottom wall plate.

12. Wall panel according to one of the foregoing claims wherein one of the horizontal battens (1b) forms a top wall plate extending continuously from one end of the connecting plate (3) to the other.

13. Wall panel according to the foregoing claim wherein the connecting plate (3) extends beyond the top wall plate in the vertical direction.

14. Construction comprising a first wall panel according to the foregoing claim wherein a slab (9) is placed on the top wall plate (1b) and wherein a second wall panel according to claim 10 is placed on the slab (9), a bottom wall plate (1b) of the second wall panel being installed bearing on the slab (9).

15. Method for manufacturing a wall panel according to any one of claims 1 to 13 comprising the following successive steps:
- providing a frame (1) provided with vertical battens (1a) made of wood and horizontal battens, the frame (1) defining holes;
- providing blanking plates;
- casting a first mixture of a curable material in which organic plant-derived elements are embedded, the mixture being cast in a mould in which the frame (1) is installed with the blanking plates partially filling the holes (2) of the frame (1) to form re-entrants (2), the mixture being cast to form a connecting plate (3) connecting all the vertical battens (1a) and all the horizontal battens (1b), the organic plant-derived elements representing at least 70% of the volume of the connecting plate (3);
wherein the connecting plate (3) partially and continuously overlaps the vertical battens (1a) in a thickness direction perpendicular to the horizontal direction and perpendicular to the vertical direction, the connecting plate (3) having a shell (3a) arranged salient from the frame (1) in the thickness direction and studs (3b) salient from the shell (3a), the studs (3b) partially filling the plurality of re-entrants (2), the connecting plate (3) having a vertical compressive strength at least equal to 1 MPa.
